# EUROPEAN PATENT SPECIFICATION

(11) **EP 3 382 843 B1**
(45) Date of publication and mention of the grant of the patent: **04.06.2025**
(21) Application number: 17163683.0
(22) Date of filing: 29.03.2017
(51) Int. Cl.: H02J 7/00, B63H 21/17, B60L 53/36, B60L 58/12, B60L 53/62, B60L 53/68

(54) **CHARGING CONTROL SYSTEM**
LADUNGSSTEUERUNGSSYSTEM
SYSTÈME DE COMMANDE DE CHARGE

(43) Date of publication of application: 03.10.2018
(73) Proprietor: Siemens Energy AS, 0596 Oslo (NO)
(72) Inventor: Lohn, Hallgeir Magne, 7025 Trondheim (NO); Moen, Stian Skorstad, 7081 Sjetnemarka (NO)
(74) Representative: Roth, Thomas

(56) References cited:
- US-A1- 2012 316 717
- US-A1- 2014 152 254
- US-A1- 2016 335 377

## Description

This invention relates to an electric charging control system and method, in particular for a vessel, such as an electric ferry, or for a vehicle, or aircraft.

Electric ferries may operate solely with batteries on board to power the vessel, or with a hybrid of diesel generators and batteries. In either case, the batteries require charging from a shore supply when docked. In some locations the shore power grid is not robust enough to support the high current requirement to charge the batteries on the vessel directly, so an intermediate shore based energy storage system is provided, which can charge more slowly from the local shore power grid and be able to provide high current charging to the vessel, whilst the vessel is docked. The charging of the shore based energy storage system is typically at a set rate. This may be set to avoid demand charges for exceeding peak levels, but may still result in charging taking place at times that are subject to a higher rate per unit, increasing the cost of operating the vessel, or may result in their being insufficient charge available for the vessel's requirement at the time that it docks.

US20120316717 describes a controller onboard a vehicle and energy management system to estimate electric loads of the vehicle over a trip and communicate demanded energy to wayside stations.

In accordance with a first aspect of the present invention an electric power supply charging control system for a vessel, vehicle, or aircraft, the system comprising one or more energy storage modules on the vessel, vehicle, or aircraft; an onboard controller for deriving an estimate of a future charging requirement of each of the energy storage modules from a determined level of charge of each of the energy storage modules; and a wireless communication system onboard the vessel, vehicle, or aircraft, whereby the estimated future charging requirement is communicated to a remote charging station in advance of the vessel, vehicle, or aircraft arriving at and connecting to the remote charging station; wherein the remote charging station comprises a plurality of energy storage modules, a controller, a wireless communication system and an AC to DC converter, wherein the AC to DC converter is connectable to an AC power grid to supply charge to the energy storage modules; wherein the wireless communication system is adapted to receive an estimated future charging requirement communicated to the remote charging station in advance of a vessel, vehicle, or aircraft arriving at the remote charging station; and wherein the remote charging station further comprises a connector removeably connectable to the vessel, vehicle, or aircraft for electrically connecting the remote charging station energy storage modules to energy storage modules onboard the vessel, vehicle or aircraft to charge the onboard storage modules; wherein the remote charging station is configured to carry out a method, in the controller of the remote charging station, to calculate a minimum charging rate allowing to meet the received estimate of future charging requirement and draw charge from the AC power grid at the calculated minimum rate to charge the remote charging station energy storage modules if the calculated minimum charging rate is smaller than a defined maximum charging rate.

The controller determines the charging requirement at a predetermined time before arriving at the remote charging station and communicates this information to the remote charging station to enable the remote charging station to have acquired sufficient charge for the stated requirement, in a cost effective manner, by the time the vessel, vehicle or aircraft connects for charging.

The wireless communication system may comprise one of a radio communication, telecommunication, satellite communication, or internet based communication system.

The onboard controller may further comprise voltage or current detectors for determining a level of charge of each of the energy storage modules.

The power supply may comprise a marine vessel power supply and the remote charging station may comprise a shore based charging station, a windfarm, an offshore platform, a production platform, or another vessel.

In accordance with a second aspect of the present invention, a vessel, vehicle, or aircraft comprising a system according to the first aspect; and at least one consumer on board the vessel, vehicle, or aircraft, connected to the energy storage modules.

In accordance with a fourth aspect of the present invention, a method of controlling charging of an electric power supply for a vessel, vehicle, or aircraft, comprises determining in a controller, a level of charge of each of a plurality of energy storage modules on the vessel, vehicle, or aircraft; deriving an estimate of a future charging requirement of each of the energy storage modules, including a clock time at which that requirement is to be supplied; communicating the estimated future charging requirement to a remote charging station via a wireless communication system, in advance of the vessel, vehicle, or aircraft, arriving at the remote charging station; and subsequently electrically connecting the vessel, vehicle, or aircraft to the remote charging station, in order to charge the energy storage devices; wherein the method further comprises, in a controller of the remote charging station, to calculate a minimum charging rate allowing to meet the received estimate of future charging requirement and drawing charge from the AC power grid at the calculated minimum rate to charge the remote charging station energy storage modules if the calculated minimum charging rate is smaller than a defined maximum charging rate.

The controller typically comprises an onboard controller on the vessel, vehicle or aircraft.

Deriving the estimate of a future charging requirement may comprise determining at least one of distance to the location of the charging station from the current location; wind strength or sea state; speed over the ground, cargo or passenger load; or time of day.

Historic data from a predetermined number of previous journeys may be used to calculate an energy requirement.

The method may further comprise adapting the calculated minimum charging rate to take account of additional future charging requirement requests received after the charging station has started to draw from the AC power grid.

The method may further comprise offering an alternative clock time for the energy supply, in the event that the charging station is unable to meet the estimated future charging requirement, and waiting for acceptance of that offer before starting to draw from the AC power grid.

The method may further comprise detecting an absence of pending future charging requirements; and drawing from the AC power grid at a preset default current level until an estimate of future charging requirement is received, or until the energy storage modules of the charging station are fully charged.

The power supply may comprise one of a vehicle, aircraft, or a vessel power supply.

An example of an electric power supply charging control system in accordance with the present invention will now be described with reference to the accompanying drawings in which:
Figure 1 illustrates a first example of an electric power supply charging control system according to the invention;
Figure 2 illustrates part of the system of Fig.1 in more detail;
Figure 3 illustrates another part of the system of Fig.1 in more detail; and,
Figure 4 is a flow diagram illustrating a method of controlling charging of a marine vessel electric power supply according to the present invention.

Battery powered vessels, for example ferries running between ports with charging stations at each port may operate as purely DC battery powered only, or with a hybrid of diesel generators and batteries. When docked at each port, they connect to a remote supply, typically a shore based AC supply to charge the batteries ready for the next journey. In remote locations, this shore based AC supply is not sufficient to allow direct connection and high current charging to charge in a relatively short timescale before the ferry must depart again, so a remote energy storage system is provided, in this example, a shore based energy storage system, which charges from the AC power grid more slowly, then has stored energy available to provide to the vessel when the vessel is connected to the remote charging station. The time available for charging the vessel may be limited by the time taken to unload and load the vessel before it sets off again, which may be as little as a few minutes for local ferries crossing short stretches of water, although longer for larger, long distance vessels. Although electric, or hybrid vessels, are still relatively rare, the number is expected to increase and in future, the shore based charging systems may have to be shared between multiple vessels having different operators, so it cannot be assumed that a particular vessel has sole access to the shore based charging station. This requires a mechanism by which the charging requirement of the vessel, or vessels, that visit a particular port can be met.

As mentioned above, where the local AC power grid is unable to provide the necessary high current supply to the vessel for rapid charging, or cannot supply the number of vessels requiring charge at the same time, then a remote charging station is provided, comprising a plurality of energy storage modules, which are charged more slowly from the AC power grid. The maximum current that is drawn from the AC power grid may then be chosen to be low enough, so as not to inconvenience other users. When the vessel is plugged in to the shore based charging station, high current charging is possible, so the batteries on the vessel may be charged relatively quickly compared to what would be possible with that AC power grid alone. The vessels supplied in this way may have electric motors having an output from a few hundred kilowatts upwards.

However, the shore based charging station has no knowledge of when a vessel will connect, nor of the total charge the vessel will demand in the time available. This results in the rate of charging being set to be as high as the local grid will stand and causing current fluctuations on the grid each time the shore based charging station needs to recharge, as this must be done as quickly as possible, in case the charging system is needed again soon afterwards. The present invention reduces the current fluctuations in what is drawn from the grid by receiving instructions from the vessel in advance of its arrival, so that the current drawn from the power grid is evened out as much as possible and the current drawn is as low as possible whilst still charging sufficiently to meet the stated requirement.

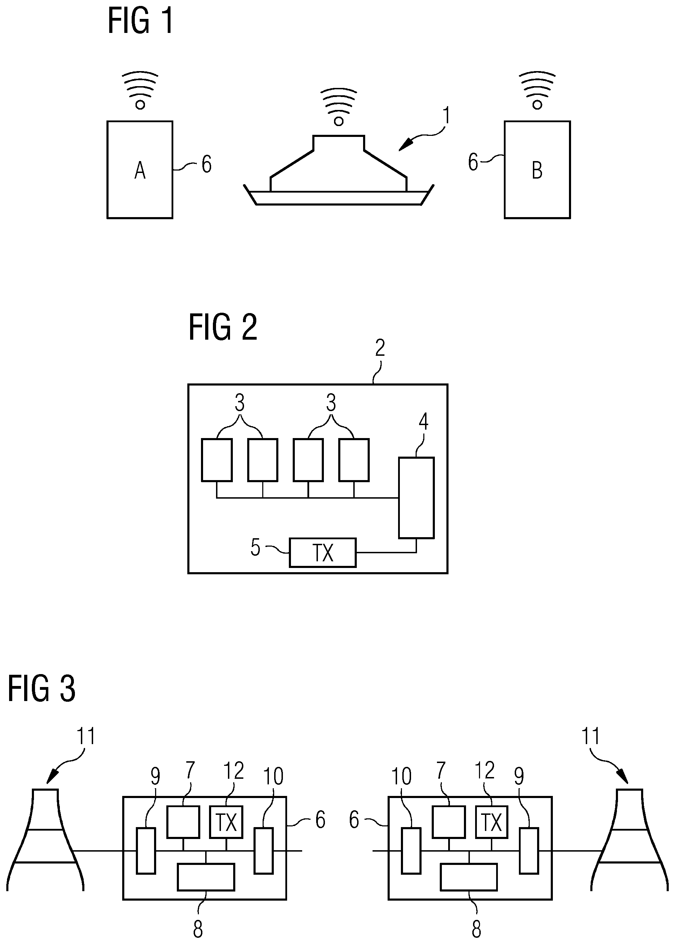

A typical situation with a ferry is indicated in Fig.1. The vessel 1 charges up at a charging station 6, station A, before setting off on its journey. At station B the vessel recharges, then returns to its starting point and recharges again at station A. In the case of a vessel on a multi-stage journey, there may be several more ports, each with its own charging station, that are visited before returning to its home port. At each port, the vessel must be able to obtain sufficient charge to continue on its journey and the charging must be possible within a timeframe that allows the vessel to keep to its schedule. The charging requirement of the vessel at any charging station may depend upon the distance from the previous charging station, which relates to a minimum amount of power that the vessel will use to cover that distance, but there are also other parameters, such as headwinds, wave height, cargo load, passenger load and time of day, which may influence the amount of energy that the vessel uses in the course of the journey and the rate at which it uses it. In addition, the vessel may add a safety margin, to avoid a loss of power when still at sea.

Onboard the vessel, as illustrated in Fig.2, an energy storage system 2 comprises a plurality of energy storage modules 3 connected to a controller 4 and a wireless communication system 5. Using both fixed and variable parameters relating to the vessel's journey, the controller 4 estimates the future energy requirement of the vessel at its next charging stop and communicates an instruction to the shore based charging unit 6 indicating the requirement and the estimated time of arrival of the vessel, this typically being the time by which that requirement needs to have been met by the shore based charging station 6. The estimated charging requirement may make use of historic data, such as average or weighted energy usage over a predetermined number of journeys, e.g. five to ten journeys. The estimated time of arrival may use the scheduled time of arrival for a regular service, such as a ferry, the average, or weighted, time of arrival over a predetermined number of journeys, adjusted by real time data relating to delays, if available, actual speed over the ground and distance to the destination, or other combinations.

As can be seen in Fig.3, each shore based charging station comprises a wireless communication system 12, a controller 7 and one or more energy storage devices 8. The instruction received from the vessel is passed to the controller 7 which determines the level of charge of the energy storage devices in the remote charging station and based on the time by which the vessel requirement needs to be met, determines the average grid current needed and controls the rate at which current is drawn from the AC grid 11 to charge the energy storage devices 8 in time. The charging station communication system 12 sends an acknowledgement to the vessel confirming that it can meet the charging requirement as instructed, or if it is unable to do so, for example due to other vessels already being booked to recharge at the requested time, it indicates an alternative that can be achieved, or rejects the instruction.

The vessel may communicate the charging instruction at a predetermined clock time, or a fixed time after setting off from its previous port, or a fixed time before its estimated time of arrival at the next port. Alternatively, the instruction may be communicated when the level of charge of the onboard energy storage devices is detected as having dropped below a predetermined value. The communication may be any wireless means, such as radio link, satellite link, telecommunications link, mobile data, or internet based communication. Multiple communication paths may be used to ensure success, in which case the charging station controller 7 detects an identifier in the message before attempting to meet a request for charging and rejects the request if a pending instruction with the same identifier already exists.

The controller in the charging station monitors whether an instruction has been received, but not yet satisfied by supplying that energy to a vessel, i.e. there is an instruction pending. If there is no such instruction pending, then the charging station continues to charge from the AC grid at a default rate until a new instruction is received. The absence of a pending instruction may be due to a fault on the communication system preventing receipt of instructions, or the vessel may be out of range, or there may be no vessels for which that charging station at that port, are the next destination. One or more vessels may use the same charging station, but only if the gap between the time of arrival, or time by which the vessel requirement must be met, is sufficient to allow the charging station to recharge at the maximum available rate of charge. For all pending instructions, as well as determining the average charge required to meet the request, the charging station controller may add a margin of error, if the energy storage devices 8 in the charging station are not already, or would not end up, fully charged. The charging station may handle multiple instructions and charge to achieve the combined requirement of all accepted instructions. If a charging request is cancelled before the energy storage devices are fully charged, the charging may continue at the previously specified rate, if that is lower than the default (no pending instructions) rate.

Having received an instruction from a vessel, the controller of the charging station may determine the average current that must be drawn from the grid in order to meet the energy order and uses this in combination with information about the energy already in the energy storage devices of the charging system in order to calculate how low a current may be drawn in order to meet the requirement, so as to optimise the charging.

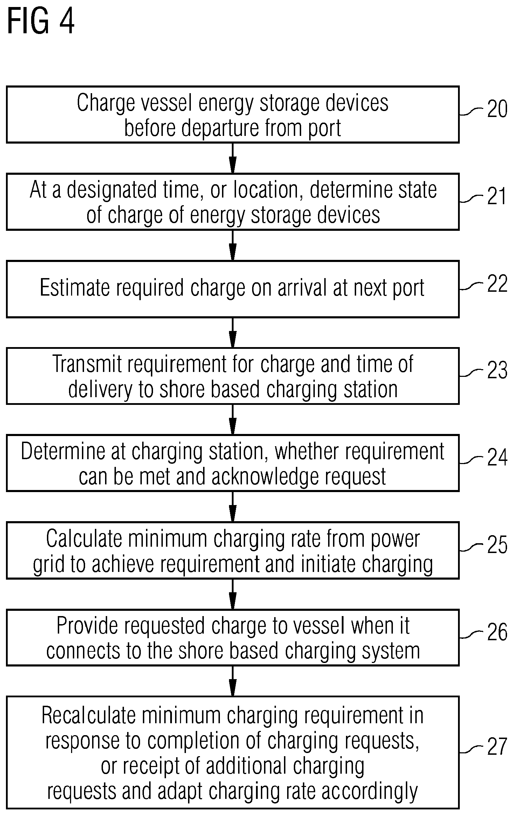

An example of a method of controlling charging of an electric power supply is summarised in the flow diagram of Fig.4. Energy storage devices 3 on a vessel 1 are charged 20 before the vessel leaves port. At a designated point in the journey, which may be based on location, time, or level of charge of the energy storage devices, the onboard controller 4 detects 21 the level of charge of the energy storage devices 3. From this, the controller 4 estimates 22 the likely remaining charge when the vessel reaches its next port, or charging opportunity, determines the hour at which the vessel will need to recharge, the location and the amount of charge, as well as the time the vessel will remain in port, available for charging to the requested level, then sends an instruction 23 by wireless communication to the charging station at its next port, giving a requirement of the calculated level of charge and time.

At the shore based charging station 6, a determination is made 24 by the controller 7 as to whether or not the requirement can be met and the instruction is acknowledged via the wireless communication system 12. Further information may be sent in the acknowledgement, for example if only a modified version of the requirement can be met, such as at a later time, or for a shorter period, or lower charge rate. The controller 7 then calculates 25 the minimum charging rate required in order to meet the requirement, starts drawing current to charge its energy storage modules 8 and controls the rate at which current is drawn from the power grid 11 accordingly.

When the vessel docks, it is connected to the charging system and the requested level of charge is supplied 26 to the vessel. The controller 7 of the charging system may choose to allow the vessel to take some of the additional charge, that was added as a margin of error, if needed, provided that this does not unduly impact on the next vessel that needs charging. After charging, the vessel disconnects from the charging system, leaving it available for another vessel. In some cases, this may occur before the vessel departs from the port. Throughout the operation of the charging system 6 incoming requests and completion of pending requests are monitored and the rate at which the charging station charges from the power grid is adapted as necessary.

The present invention has a number of advantages, including being able to operate with a lower grid current enabling vessels to be charged in places, which do not have sufficient grid power for presently available systems. The cost to the operator of the vessel is reduced in cases where the charge for power from the grid is calculated on the basis of peak power each month, rather than average, or actual power use. Furthermore, in some cases, there may be limits on peak power drawn, which would prevent charging altogether for a vessel relying on direct AC charging, or unable to charge by drawing low levels of charge. Another benefit is that losses in system are reduced by keeping the charging current as low as possible.

For the charging station operator, as well as the vessel operator, the lifetime of the energy storage devices is prolonged by applying close to the minimum charge needed to the energy storage devices on both the ferry and the vessel. In particular, the lifetime of a lithium ion battery is very dependent on the charging level and charging currents, so optimising these makes a significant difference.

The present invention has been described with respect to an electric or hybrid electric vessel, but is equally applicable to land based electric or hybrid electric vehicles, or aircraft, wishing to have certainty about the availability of sufficient high current charging, for example in remote locations where the AC power grid is unable to support rapid DC charging, to enable the vehicle or electric aircraft to complete its journey. Reference to the example of a shore based charging station being the remote supply does not include other types of remote charging station, or off-grid supply, such as an offshore wind farm, offshore platform, offshore production facility, or another vessel, vehicle or aircraft adapted to act as the remote supply.

## Claims

1. An electric power supply charging control system (2) for a vessel, vehicle, or aircraft, the system comprising one or more energy storage modules (3) on the vessel, vehicle, or aircraft; an onboard controller (4) for deriving an estimate of a future charging requirement of each of the energy storage modules (3) from a determined level of charge of each of the energy storage modules; and a wireless communication system (5) onboard the vessel, vehicle, or aircraft, whereby the estimated future charging requirement is communicated to a remote charging station in advance of the vessel, vehicle, or aircraft arriving at and connecting to the remote charging station; wherein the remote charging station (6) comprises a plurality of energy storage modules (8), a controller (7), a wireless communication system (12) and an AC to DC converter, wherein the AC to DC converter is connectable to an AC power grid (11) to supply charge to the energy storage modules (8); wherein the wireless communication system (12) is adapted to receive an estimated future charging requirement communicated to the remote charging station (6) in advance of a vessel, vehicle, or aircraft arriving at the remote charging station; and wherein the remote charging station further comprises a connector removeably connectable to the vessel, vehicle, or aircraft for electrically connecting the remote charging station energy storage modules (8) to energy storage modules (3) onboard the vessel, vehicle or aircraft to charge the onboard storage modules; wherein the remote charging station (6) is configured to carry out a method, in the controller (7) of the remote charging station, to calculate a minimum charging rate allowing to meet the received estimate of future charging requirement, and draw charge from the AC power grid (11) at the calculated minimum rate to charge the remote charging station energy storage modules (8) if the calculated minimum charging rate is smaller than a defined maximum charging rate.

2. A system according to claim 1, wherein the wireless communication system (5) comprises one of a radio communication, telecommunication, satellite communication, or internet based communication system.

3. A system according to claim 1 or claim 2, wherein the onboard controller (4) further comprises voltage or current detectors for determining a level of charge of each of the energy storage modules (3).

4. A system according to any of claims 1 to 3, wherein the power supply comprises a marine vessel power supply and the remote charging station (6) comprises a shore-based charging station.

5. A vessel, vehicle, or aircraft, comprising a system according to any preceding claim; and at least one consumer on board the vessel, vehicle, or aircraft, connected to the energy storage modules (3).

6. A method of controlling charging of an electric power supply for a vessel, or vehicle, the method comprising determining in a controller (4), a level of charge of each of a plurality of energy storage modules (3) on the vessel, vehicle, or aircraft; deriving an estimate of a future charging requirement of each of the energy storage modules (3), including a clock time at which that requirement is to be supplied; communicating the estimated future charging requirement to a remote charging station (6) via a wireless communication system (12), in advance of the vessel, vehicle, or aircraft, arriving at the remote charging station; and electrically connecting the vessel, vehicle, or aircraft to the remote charging station, in order to charge the energy storage devices (3); wherein the method further comprises, in a controller (7) of the remote charging station, to calculate a minimum charging rate allowing to meet the received estimate of future charging requirement and drawing charge from the AC power grid (11) at the calculated minimum rate to charge the remote charging station energy storage modules (8) if the calculated minimum charging rate is smaller tha a defined maximum charging rate.

7. A method according to claim 6, wherein deriving the estimate of a future charging requirement comprises determining at least one of distance to the location of the charging station from the current location; wind strength or sea state; speed over the ground, cargo or passenger load; or time of day.

8. A method according to claim 6 or claim 7, wherein historic data from a predetermined number of previous journeys is used to calculate an energy requirement.

9. A method according to claim 6, wherein the method further comprises adapting the calculated minimum charging rate to take account of additional future charging requirement requests received after the charging station has started to draw from the AC power grid (11).

10. A method according to any of claims 6 to 9, wherein the method further comprises offering an altemative clock time for the energy supply, in the event that the charging station (6) is unable to meet the estimated future charging requirement, and waiting for acceptance of that offer before starting to draw from the AC power grid (11).

11. A method according to any of claims 6 to 10, wherein the method further comprises detecting an absence of pending future charging requirements; and drawing from the AC power grid (11) at a preset default current level until an estimate of future charging requirement is received, or until the energy storage modules (8) of the charging station (6) are fully charged.

12. A method according to any of claims 6 to 11, wherein the power supply comprises one of a vehicle, aircraft, or a vessel power supply.

## Patentansprüche

1. Ladesteuerungssystem (2) für die elektrische Energieversorgung für ein Schiff, Fahrzeug oder Flugzeug, wobei das System umfasst: ein oder mehrere Energiespeichermodule (3) an Bord des Schiffes, Fahrzeugs oder Flugzeugs; eine bordseitige Steuerung (4) zum Ableiten einer Schätzung eines zukünftigen Ladebedarfs jedes der Energiespeichermodule (3) aus einem bestimmten Ladezustand jedes der Energiespeichermodule; und ein drahtloses Kommunikationssystem (5) an Bord des Schiffes, Fahrzeugs oder Flugzeugs, wobei der geschätzte zukünftige Ladebedarf an eine entfernte Ladestation übermittelt wird, bevor das Schiff, Fahrzeug oder Flugzeug an der entfernten Ladestation ankommt und sich mit ihr verbindet; wobei die entfernte Ladestation (6) mehrere Energiespeichermodule (8), eine Steuerung (7), ein drahtloses Kommunikationssystem (12) und einen Wechselstrom-Gleichstrom-Wandler umfasst, wobei der Wechselstrom-Gleichstrom-Wandler an ein Wechselstromnetz (11) anschließbar ist, um die Energiespeichermodule (8) mit Ladung zu versorgen; wobei das drahtlose Kommunikationssystem (12) dafür ausgelegt ist, einen geschätzten zukünftigen Ladebedarf zu empfangen, der an die entfernte Ladestation (6) übermittelt wurde, bevor ein Schiff, Fahrzeug oder Flugzeug an der entfernten Ladestation ankommt; und wobei die entfernte Ladestation ferner einen Steckverbinder umfasst, der abnehmbar mit dem Schiff, Fahrzeug oder Flugzeug verbunden werden kann, um die Energiespeichermodule (8) der entfernten Ladestation mit Energiespeichermodulen (3) an Bord des Schiffes, Fahrzeugs oder Flugzeugs elektrisch zu verbinden, um die Speichermodule an Bord zu laden; wobei die entfernte Ladestation (6) dafür ausgelegt ist, ein Verfahren in der Steuerung (7) der entfernten Ladestation auszuführen, um eine minimale Laderate zu berechnen, die es erlaubt, die empfangene Schätzung des zukünftigen Ladebedarfs zu erfüllen, und Ladung aus dem Wechselstromnetz (11) mit der berechneten minimalen Rate zu entnehmen, um die Energiespeichermodule (8) der entfernten Ladestation zu laden, wenn die berechnete minimale Laderate kleiner als eine definierte maximale Laderate ist.

2. System nach Anspruch 1, wobei das drahtlose Kommunikationssystem (5) eines von einem Funkkommunikations-, Telekommunikations-, Satellitenkommunikations- oder internetbasierten Kommunikationssystem umfasst.

3. System nach Anspruch 1 oder Anspruch 2, wobei die bordseitige Steuerung (4) ferner Spannungs- oder Stromdetektoren zum Bestimmen eines Ladezustands jedes der Energiespeichermodule (3) umfasst.

4. System nach einem der Ansprüche 1 bis 3, wobei die Energieversorgung eine Schiffsstromversorgung umfasst und die entfernte Ladestation (6) eine landgestützte Ladestation umfasst.

5. Schiff, Fahrzeug oder Flugzeug, umfassend ein System nach einem der vorstehenden Ansprüche und mindestens einen Verbraucher an Bord des Schiffes, Fahrzeugs oder Flugzeugs, der mit den Energiespeichermodulen (3) verbunden ist.

6. Verfahren zum Steuern des Ladens einer elektrischen Energieversorgung für ein Schiff oder ein Fahrzeug, wobei das Verfahren, in einer Steuerung (4), umfasst: Bestimmen eines Ladezustands jedes von mehreren Energiespeichermodulen (3) an Bord des Schiffes, Fahrzeugs oder Flugzeugs; Ableiten einer Schätzung eines zukünftigen Ladebedarfs jedes der Energiespeichermodule (3), einschließlich einer Uhrzeit, zu der dieser Bedarf geliefert werden soll; Übermitteln des geschätzten zukünftigen Ladebedarfs an eine entfernte Ladestation (6) über ein drahtloses Kommunikationssystem (12), bevor das Schiff, Fahrzeug oder Flugzeug an der entfernten Ladestation ankommt; und elektrisches Verbinden des Schiffes, Fahrzeugs oder Flugzeugs mit der entfernten Ladestation, um die Energiespeichervorrichtungen (3) zu laden; wobei das Verfahren ferner umfasst, in einer Steuerung (7) der entfernten Ladestation, eine minimale Laderate zu berechnen, die es erlaubt, die empfangene Schätzung des zukünftigen Ladebedarfs zu erfüllen und Ladung aus dem Wechselstromnetz (11) mit der berechneten minimalen Rate zu entnehmen, um die Energiespeichermodule (8) der entfernten Ladestation zu laden, wenn die berechnete minimale Laderate kleiner als eine definierte maximale Laderate ist.

7. Verfahren nach Anspruch 6, wobei das Ableiten der Schätzung eines zukünftigen Ladebedarfs das Bestimmen einer Entfernung zum Standort der Ladestation vom aktuellen Standort, einer Windstärke oder eines Seegangs, einer Geschwindigkeit über Grund, einer Ladung oder Passagierlast und/oder einer Tageszeit umfasst.

8. Verfahren nach Anspruch 6 oder 7, wobei historische Daten aus einer vorgegebenen Anzahl früherer Reisen zum Berechnen des Energiebedarfs verwendet werden.

9. Verfahren nach Anspruch 6, wobei das Verfahren ferner das Anpassen der berechneten minimalen Laderate umfasst, um zusätzliche zukünftige Ladeanforderungen zu berücksichtigen, die empfangen werden, nachdem die Ladestation begonnen hat, Strom aus dem Wechselstromnetz (11) zu entnehmen.

10. Verfahren nach einem der Ansprüche 6 bis 9, wobei das Verfahren ferner umfasst: Anbieten einer alternativen Uhrzeit für die Energieversorgung für den Fall, dass die Ladestation (6) nicht in der Lage ist, den geschätzten zukünftigen Ladebedarf zu decken, und Warten auf die Annahme dieses Angebots vor Beginn der Entnahme aus dem Wechselstromnetz (11).

11. Verfahren nach einem der Ansprüche 6 bis 10, wobei das Verfahren ferner umfasst: Erkennen des Fehlens anstehender zukünftiger Ladeanforderungen; und Entnehmen aus dem Wechselstromnetz (11) mit einem voreingestellten Standardstrompegel, bis eine Schätzung der zukünftigen Ladeanforderung empfangen wird oder bis die Energiespeichermodule (8) der Ladestation (6) vollständig geladen sind.

12. Verfahren nach einem der Ansprüche 6 bis 11, wobei die Energieversorgung entweder eine Fahrzeug-, eine Flugzeug- oder eine Schiffsstromversorgung umfasst.

## Revendications

1. Un système (2) de commande de charge d'une alimentation électrique pour un vaisseau, un véhicule ou un aéronef, le système comprenant un ou plusieurs modules (3) d'accumulation d'énergie sur le vaisseau, le véhicule ou l'aéronef ; une unité (4) de commande à bord pour déduire une estimation d'une exigence de chargement à venir de chacun des modules (3) d'accumulation d'énergie à partir d'un niveau déterminé de charge de chacun des modules d'accumulation d'énergie ; et un système (5) de communication sans fil à bord du vaisseau, du véhicule ou de l'aéronef, dans lequel l'exigence de chargement à venir estimée est communiquée à un poste de chargement à distance en avance du vaisseau, du véhicule ou de l'aéronef arrivant au poste de chargement à distance et s'y connectant ; dans lequel le poste (6) de chargement à distance comprend une pluralité de modules (8) d'accumulation d'énergie, une unité (7) de commande, un système (12) de communication sans fil et un convertisseur de courant alternatif en courant continu, dans lequel le convertisseur de courant alternatif en courant continu peut être connecté à un réseau (11) de courant alternatif pour envoyer une charge aux modules (8) d'accumulation d'énergie ; dans lequel le système (12) de communication sans fil est propre à recevoir une exigence de chargement à venir estimée communiquée au poste (6) de chargement à distance en avance du vaisseau, du véhicule ou de l'aéronef arrivant au poste de chargement à distance ; et dans lequel le poste de chargement à distance comprend en outre un connecteur pouvant être connecté de manière amovible au vaisseau, au véhicule ou à l'aéronef pour connecter électriquement les modules (8) d'accumulation d'énergie du poste de chargement à distance aux modules (3) d'accumulation d'énergie à bord du vaisseau, du véhicule ou de l'aéronef afin de charger les modules d'accumulation à bord ; dans lequel le poste (6) de chargement à distance est configuré pour effectuer un procédé, dans l'unité (7) de commande du poste de chargement à distance, de calcul d'un régime de chargement minimum pour satisfaire l'estimation reçue de l'exigence de chargement à venir ; et tirer de la charge du réseau (11) en courant alternatif au régime minimum calculé pour charger les modules (8) d'accumulation d'énergie du poste de chargement à distance, si le régime de chargement minimum calculé est plus petit qu'un régime de chargement maximum défini.

2. Un système suivant la revendication 1, dans lequel le système (5) de communication sans fil comprend l'un d'une communication radio, d'une télécommunication, d'une communication par satellite ou d'une communication reposant sur l'internet.

3. Un système suivant la revendication 1 ou la revendication 2, dans lequel l'unité (4) de commande à bord comprend en outre des détecteurs de tension ou de courant pour déterminer un niveau de charge de chacun des modules (3) d'accumulation d'énergie.

4. Un système suivant l'une quelconque des revendications 1 à 3, dans lequel l'alimentation comprend une alimentation de vaisseau marin et le poste (6) de chargement à distance comprend un poste de chargement à terre.

5. Un vaisseau, un véhicule ou un aéronef, comprenant un système suivant l'une quelconque des revendications précédentes ; dans lequel au moins l'un d'un consommateur à bord du vaisseau, du véhicule ou de l'aéronef est connecté aux modules (3) d'accumulation d'énergie.

6. Procédé de commande du chargement d'une alimentation électrique pour un vaisseau ou un véhicule, le procédé comprenant déterminer, dans une unité (4) de commande, un niveau de charge de chacun de la pluralité de modules (3) d'accumulation d'énergie sur le vaisseau, le véhicule ou l'aéronef ; déduire une estimation d'une exigence de chargement à venir de chacun des modules (3) d'accumulation d'énergie, incluant un temps d'horloge où cette exigence doit être satisfaite ; communiquer l'exigence de chargement à venir estimée à un poste (6) de chargement à distance en passant par un système (12) de communication sans fil, en avance du vaisseau, du véhicule ou de l'aéronef arrivant au poste de chargement à distance ; et connecter électriquement le vaisseau, le véhicule ou l'aéronef au poste de chargement à distance, afin de charger les dispositifs (3) d'accumulation d'énergie ; dans lequel le procédé comprend en outre, dans une unité (7) de commande du poste de chargement à distance, calculer un régime de chargement minimum permettant de satisfaire l'estimation reçue d'une exigence de chargement à venir et tirer de la charge du réseau (11) en courant alternatif au régime minimum calculé pour charger les modules (8) d'accumulation d'énergie du poste de chargement à distance, si le régime de chargement minimum calculé est plus petit qu'un régime de chargement maximum défini.

7. Un procédé suivant la revendication 6, dans lequel déduire l'estimation d'une exigence de chargement à venir comprend déterminer au moins l'un d'une distance de l'emplacement du poste de chargement à l'emplacement en cours, d'une vitesse du vent ou de l'état de la mer ; d'une vitesse sur le sol ; d'une charge en cargaison ou en passagers ; ou de l'heure du jour.

8. Un procédé suivant la revendication 6 ou la revendication 7, dans lequel on utilise une donnée historique à partir d'un nombre déterminé à l'avance de voyages précédents pour calculer l'exigence d'énergie.

9. Un procédé suivant la revendication 6, dans lequel le procédé comprend en outre adapter le régime de chargement minimum calculé pour prendre en compte des demandes supplémentaires d'exigences de chargement à venir, après que le poste de chargement a commencé à tirer de l'électricité du réseau (11) en courant alternatif.

10. Un procédé suivant l'une quelconque des revendications 6 à 9, dans lequel le procédé comprend en outre offrir un temps d'horloge alternatif pour l'alimentation en énergie électrique, dans le cas où le poste (6) de chargement est incapable de satisfaire l'exigence de chargement à venir estimée, et attendre l'acceptation de cette offre avant de commencer à tirer de l'énergie du réseau (11) en courant alternatif.

11. Un procédé suivant l'une quelconque des revendications 6 à 10, dans lequel le procédé comprend en outre détecter une absence d'exigence pendante de chargement à venir ; et tirer du réseau (11) en courant alternatif un niveau de courant de défaut fixé à l'avance, jusqu'à réception d'une estimation d'une exigence de chargement à venir, ou jusqu'à ce que les modules (8) d'accumulation d'énergie du poste (6) de chargement soient chargés complètement.

12. Un procédé suivant l'une quelconque des revendications 6 à 11, dans lequel l'alimentation en courant électrique comprend l'une d'une alimentation en courant électrique d'un véhicule, d'un aéronef ou d'un vaisseau.
